Europäisches Patentamt

European Patent Office

Office européen des brevets

(19)

(11) Veröffentlichungsnummer: **0 302 182**

**A2**

(12) # EUROPÄISCHE PATENTANMELDUNG

(21) Anmeldenummer: 88106618.7

(22) Anmeldetag: 26.04.88

(51) Int. Cl.4: **G01J 1/04 , G03B 17/06**

(30) Priorität: 07.08.87 DE 3726220

(43) Veröffentlichungstag der Anmeldung:
08.02.89 Patentblatt 89/06

(84) Benannte Vertragsstaaten:
AT CH DE ES FR GB IT LI

(71) Anmelder: **GOSSEN GMBH**
**Nägelsbachstrasse 25**
**D-8520 Erlangen(DE)**

(72) Erfinder: **Henneberger, Heinz, Dipl.-Ing.**
**Tilmann Riemenschneider 45**
**D-8552 Höchstadt a.d. Aisch(DE)**
Erfinder: **Seifert, Wilhelm, Dipl.-Phys. Dr.**
**Adam-Krafft-Strasse 11**
**D-8552 Höchstadt a.d. Aisch(DE)**
Erfinder: **Niersberger, Rudolf**
**Dammstrasse 14**
**D-8523 Baiersdorf(DE)**

(74) Vertreter: **Hafner, Dieter, Dr.rer.nat.,**
**Dipl.-Phys.**
**Ostendstrasse 132**
**D-8500 Nürnberg 30(DE)**

(54) **Vorrichtung zur selektiven Lichtmessung.**

(57) Eine Vorrichtung zur selektiven Lichtmessung für photographische Zwecke, nämlich ein Handbelichtungsmesser mit einem optischen Suchersystem, mit einem Okular, einer Objektivlinse sowie optischen Umlenkelementen zum Aufsuchen und Abtasten eines photographischen Objektes sowie einer in einem Gehäuse angeordneten Meßvorrichtung, mit der eine elektronische Meßwerterfassung und - verarbeitung sowie eine Anzeigevorrichtung verbunden ist, soll derart weitergebildet werden, daß sie eine kontinuierliche Erfassung der Meßwerte beim Betrachten des photographischen Objektes durch den Sucher ermöglicht, klein und robust aufgebaut und damit leicht handhabbar ist, sowie eine wirklich umfassende Information über alle photographisch relevanten, Beleuchtungsdaten ermöglicht. Dies wird dadurch erreicht, daß das Suchersystem 2, der lichtempfindliche Sensor 14, die Meßwerterfassung 14a, 14b und die Meßwertverarbeitung 14c, sowie die als Flüssigkristallanzeige 15 ausgebildete Anzeigevorrichtung in einem zweischaligen Gehäuse 9 angeordnet sind und die Anzeigevorrichtung i. w. sämtlicher Meß- und Funktionswerte als beim Anvisieren des Meßfeldes durch das Okular 3 des Suchersystems 2 gleichzeitig sichtbare und ablesbare Anzeigeelemente des im Strahlengang liegenden Displays (Flüssigkristallanzeige 15) ausgebildet und optisch um die Abbildung des Meßfeldes herum angeordnet sind.

FIG.1

## Vorrichtung zur selektiven Lichtmessung

Die Erfindung betrifft eine Vorrichtung zur selektiven Lichtmessung für photographische Zwecke in Form eines Hansbelichtungsmessers mit den Merkmalen des Oberbegriffes des Anspruches 1.

Eine derartige bekannte Vorrichtung (GOSSEN-MASTERSIX in Verbindung mit GOSSEN-PROFISPOT) besteht i. w. aus einem optischen Suchersystem mit einem Okular, einer Objektivlinse sowie optischen Umlenkelementen. Diese Elemente bilden einen Strahlengang, mit dem das ausgewählte photographische Objekt aufgesucht und abgetastet werden kann. Dieses optische Suchersystem kann an ein Gehäuse angesetzt werden, in dem eine lichtempfindliche Meßvorrichtung angeordnet ist, die auf auswählbare Abschnitte des im Sucher sichtbaren Bildes anspricht. Wenn hier von auswählbaren Abschnitten gesprochen wird, so verbirgt sich dahinter, daß der wirksame Meßwinkel der lichtempfindlichen Meßvorrichtung einstellbar ist. Bei dem Gerät nach dem Stand der Technik läßt sich der Meßwinkel zwischen 1° und 10° in Stufen variieren.

Mit der Meßvorrichtung ist eine elektronische Auswahl- und Verstärkerschaltung sowie eine Mehrzahl von Anzeige- und Einstellvorrichtungen verbunden. Die Anzeigevorrichtungen sind als Flüssigkristallanzeigen an der Frontseite des Gehäuses angeordnet. Bei aller Vielseitigkeit und Genauigkeit der bekannten Gerätekombination, die aus einem passiven Gerät (PROFISPOT) und einem elektronisch aktiven Gerät (MASTERSIX) besteht, wird es als nachteilig und umständlich erachtet, daß das Gerät zum Erfassen der Meßinformation ständig vom Auge abgesetzt werden muß. Auch ist es bekannt, im Sucher einen Referenzwert anzuzeigen, der dann nach außen auf Rechenscheiben u. dgl. übertragen werden muß, so daß zum Auswerten des Referenzwertes wiederum ein Absetzen des Gerätes vom Auge unumgänglich ist.

Der Erfindung liegt die Aufgabe zugrunde, eine Vorrichtung mit den Merkmalen des Oberbegriffes des Anspruches 1 derart weiterzubilden, daß sie eine kontinuierliche Erfassung der Meßwerte beim Betrachten des photographischen Objektes durch den Sucher ermöglicht, klein und robust aufgebaut und damit leicht handhabbar ist, sowie eine umfassende Information über alle photographisch relevanten Beleuchtungsdaten ermöglicht. Diese Aufgabe wird durch die Merkmale des Anspruches 1 gelöst, vorteilhafte Weiterbildungen der Erfindung ergeben sich aus den Unteransprüchen.

Als Kern der Erfindung wird es angesehen, das Suchersystem, die Meßvorrichtung, die Auswahl- und Verstärkerschaltung sowie die Anzeigevorrichtungen in einem ggf. aus zwei Gehäusehalbschalen gebildeten einstückigen Gehäuse anzuordnen, sowie die Anzeigevorrichtungen von allen Meß- und Funktionswerten als beim Anvisieren des Meßfeldes durch das Okular gleichzeitig sichtbare und ablesbare Anzeigeelemente eines im Strahlengang liegenden scheibenartigen Displays auszubilden und optisch um die Abbildung des Suchbildes herum anzuordnen. Durch diese für den Photographen in jeder Hinsicht arbeitsergonomische Anordnung lassen sich die photographisch relevanten Beleuchtungswerte sehr viel schneller und präziser erfassen, für das Auge des Photographen wird - da nicht laufend durch das Absetzen des Gerätes Lichtwechsel hervorgerufen werden - eine spürbare Erleichterung geschaffen. Die erfindungsgemäße Vorrichtung ermöglicht es dem Photographen, sich in einem kontinuierlichen Arbeits-Meßvorgang ganz auf das photographische Objekt zu konzentrieren, es langsam mit dem engen Meßwinkelbereich abzuscannen und dabei gleichzeitig die Variation der einschlägigen Meßwerte zu beobachten. Müßte - wie beim Stand der Technik üblich - beim Abscannen eines Objektfeldes laufend das Gerät abgesetzt werden, so ist ein erneutes Aufsuchen des Objektes erforderlich, was zeitraubend und schwierig ist.

Vorteilhafterweise ist das Display eine transmissive Flüssigkristallanzeige, die in der Bildebene des Objektives angeordnet ist. Diese zweckmäßigerweise teilweise transparente Flüssigkristallanzeige ermöglicht aufgrund ihrer baulichen Eigenarten zum einen eine sehr kompakte und leichte Ausbildung des Gerätes, zum anderen beeinflußt das LCD-Bild die Farbsichtigkeit des Photographen nicht in negativer Weise.

Besonders kompakt und funktionell läßt sich die Vorrichtung ausbilden, wenn das durch das Objektiv entworfene Zwischenbild des Meßfeldes, das durch die Augenlinse des Okulars weiter abgebildet wird - wobei zur Anpassung beider Stufen die Feldlinse erforderlich ist - auf der Displayscheibe der Flüssigkristallanzeige abgebildet und zusammen mit den gleichebig angeordneten Anzeigen durch eine Okularlinse betrachtbar ist. Dadurch kann auf komplizierte Einspiegelungen von Skalen verzichtet werden, da die LCD-Anzeige schon eine digitale Anzeige ist.

Wird eine diffuse Beleuchtungsvorrichtung, zum Beispiel Ulbrichtsche Kugel, zur Beleuchtung der Flüssigkristallanzeige angeordnet, ist ein sicheres Ablesen der Meßwerte auch noch bei relativ geringem Umgebungslicht sichergestellt. Ist die Flüssigkristallanzeige transmissiv ausgebildet, dann ist eine diffuse Beleuchtungsvorrichtung von der Rückseite der Flüssigkristallanzeige her vorteilhaft einsetzbar. Ist hingegen die Flüssigkeitskristallanzeige vom reflektierenden Typ, empfiehlt sich eine Beleuchtungsvorrichtung zwischen Okularlinse und Anzeigeelementen.

Durch die Merkmale des Anspruches 9 werden Einflüsse durch die Beleuchtungsvorrichtung auf die Meßvorrichtung weitgehend ausgeschlossen. Darüber hinaus ist es vorteilhaft, durch optische Blenden dafür zu sorgen, daß keinerlei Streulicht auf die Meßvorrichtung fällt.

Durch die Aufteilung, Ausgestaltung und Anordnung der Flüssigkristallanzeigeelemente relativ zur Bildebene wird dem Photographen auf einen Blick eine besonders übersichtliche, informative und vollständige Darstellung sämtlicher ermittelten Meßwerte ermöglicht. Er kann sich beliebig an den digitalen und/oder analogen Anzeigen der unterschiedlichsten photographischen Werte informieren und gewinnt gleichzeitig weitere Informationen über Meßwinkel, Filmempfindlichkeit, notwendige Korrekturen pp.

Vorteilhafterweise ist eine Betätigungsvorrichtung vorhanden, die der Photograph mit der Hand aktivieren kann, mit der er gleichzeitig die Vorrichtung hält.

Die Erfindung ist anhand eines Ausführungsbeispieles in den Zeichnungsfiguren näher erläutert. Diese zeigen:

Fig. 1 eine schematische Darstellung des Spotmeters;

Fig. 2 eine Darstellung des Optikblockes;

Fig. 3 Darstellung des Strahlenganges;

Fig. 4 Darstellung der um die Abbildung des Meßfeldes herum angeordneten Anzeigevorrichtungen.

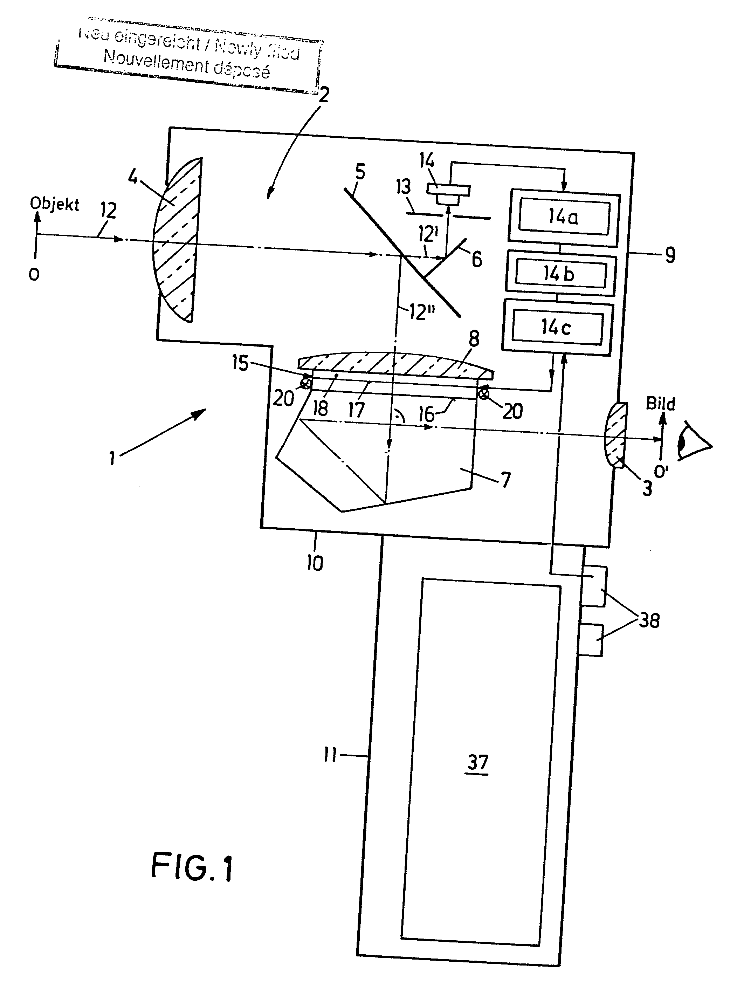

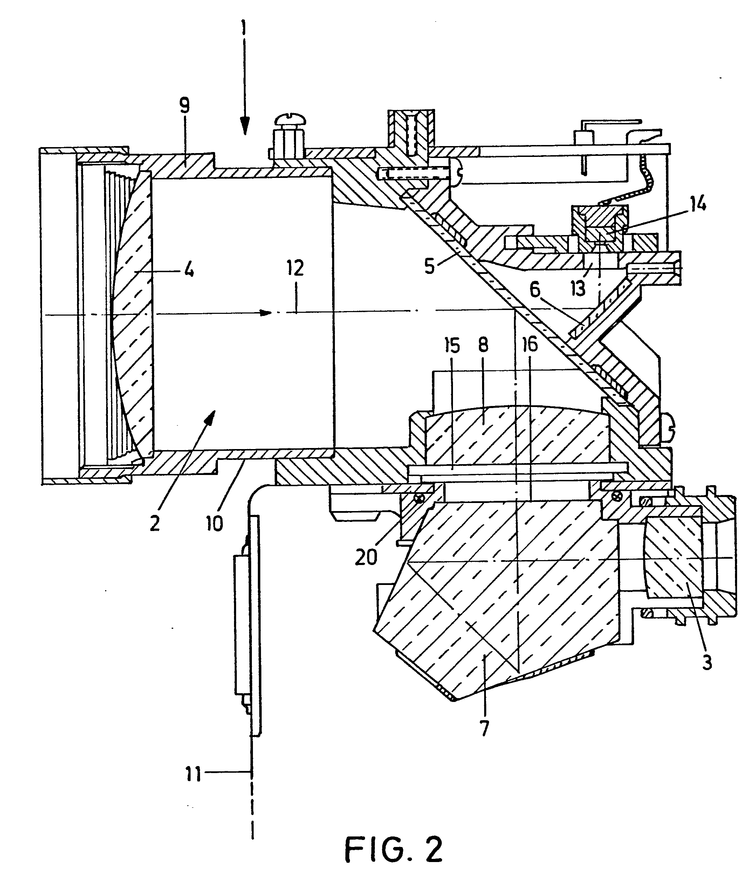

Der in Fig. 1 - 3 schematisch dargestellte Strahlengang eines Handbelichtungsmessers 1 weist ein optisches Suchersystem 2 auf, das i. w. ein Okular 3, eine Objektivlinse 4, Strahlenteiler 5, total reflektirenden Spiegel 6, ein Pentaprisma 7 sowie eine Feldlinse 8 aufweist. Diese Elemente sind in einem Gehäuse 9 angeordnet, an dessen Unterseite 10 ein Handgriff 11 vorgesehen ist.

Die Bestandteile des Suchersystems 2 sind so in dem Gehäuse 9 angeordnet, daß der einfallende Strahl 12 zunächst die Objektivlinse 4 durchsetzt, an dem Strahlenteiler 5 teilweise reflektiert wird, die weitere Feldlinse 8 durchsetzt, in dem Pentaprisma 7 durch zweimalige Reflektion 90° umgelegt wird, und dann durch das Okular 3 aus dem Strahlengang austritt.

Ein Teil 12′ des Lichtstrahles 12 durchsetzt den Strahlenteiler 5, fällt auf den total reflektierenden Spiegel 6, durchsetzt eine Blende 13 und fällt auf einen lichtempfindlichen Sensor 14, der proportional zur Beleuchtungsstärke ein elektrisches Signal abgibt, das in einer nachgeschalteten, nicht im einzelnen dargestellten Meßwertverarbeitung, bestehend aus zwei logarithmischen Verstärkern, Analog-Digital-Wandler und Mikroprozessor (14a - 14c) zur nachfolgenden Anzeige aufbereitet wird.

Die Anzeigevorrichtung ist als transmissive Flüssigkristallanzeige 15 ausgebildet, die zwischen der Feldlinse 8 und der Lichteinfallsseitenfläche 16 des Pentaprismas 7 angeordnet ist. Der Strahl 12″ durchsetzt die Flüssigkristallanzeige 15, das Bild des photographischen Objektes oder die Abbildung des Meßfeldes wird in einem als Freifeld 17 ausgebildeten Bereich der Flüssigkristallanzeige 15 abgebildet. Die Flüssigkristallanzeige 15 ist transmissiv ausgebildet, das durch das Objektiv 4 abgebildete Bild des Meßfeldes kann zusammen mit den insgesamt mit 18 bezeichneten Anzeigeelementen betrachtet werden.

Zur Beleuchtung der Anzeigeelemente 18 des Displays 15 werden die Teile der Feldlinse 8, welche über den Anzeigeelementen 18 des Displays 15 liegen, auf der konvexen Seite mit einem diffus reflektierenden Lack versehen und durch die plane Seite der Feldlinse 8 mit acht LED's 20 beleuchtet.

Es ist dabei vorteilhaft, die Feldlinse 8 größer als das Display 15 auszubilden, um die LED's 20 unmittelbar neben dem Display 15 und unter der Feldlinse 8 anbringen zu können. Die so entstehende Beleuchtungsart ähnelt derjenigen, welche mit einer Ulbrichtschen Kugel erzielbar ist.

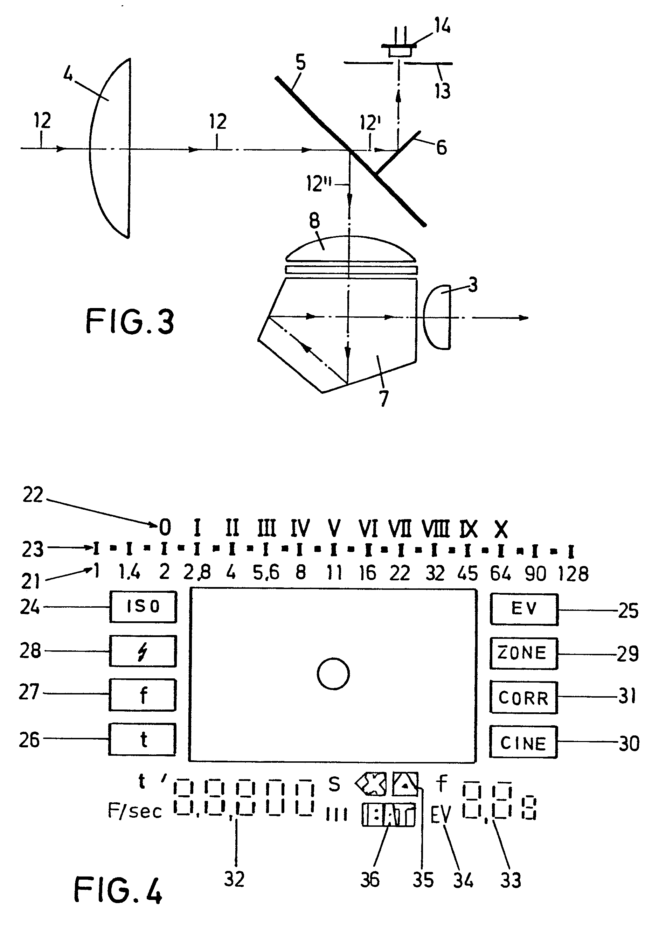

Aus Fig. 4 gehen deutlich Art und Aufteilung der bei der Flüssigkristallanzeige 15 vorgesehenen Anzeigegruppen hervor. Im oberen Bereich der Flüssigkristallanzeige 15 ist zunächst eine Blendenskala 21 parallel zu einer Zonenskala 22 angeordnet. Zwischen diesen beiden Skalen 21 und 22 befindet sich ein Bargraph 23, um die Blenden und Zonen analog anzeigen zu können. Mit 24 - 31 sind unterschiedliche Funktionskennungsmarken vorgesehen, nämlich Filmempfindlichkeitseinstellung 24, Dauerlichtmessung mit Belichtungswertanzeige 25, Dauerlichtmessung bei Zeitvorwahl 26, Dauerlichtmessung bei Blendenvorwahl 27, Blitzmessung 28, Zonenmessung 29, Cine-Funktion 30 und Korrekturwerteingabe 31. 32 und 33 bezeichnen zwei getrennte digitale Anzeigen, wobei mit einer Digitalanzeige 32 die Belichtungszeiten t, die Filmempfindlichkeit ASA, der Verlängerungsfaktor VLX, Gangzahlen F/sec und Multiblitz angezeigt werden können, die Anzeige 33 hingegen den Blendenwert f, die Filmempfindlichkeit DIN, den Belichtungswert EV, den Korrekturwert Δ B und Zonenwerte anzeigt.

Bei 34 können Einheiten bezeichnet werden, 35 ist eine Warnmarke, mit der auf eine notwendige Korrektur der Werte hingewiesen wird, die Warnmarke 36 zeigt an, daß die Batteriespannungsversorgung nicht mehr gewährleistet ist.

Wie aus Fig. 1 zu entnehmen ist, besteht der Handgriff 11 aus einem langgestreckten, nach unten abstehenden Gehäuseteil, in dem mit Vorteil eine Batterie 37 untergebracht werden kann. An der Rückseite des Handgriffes 11 sind Bedienungselemente 38, wie beispielsweise ein Stand-by-Schalter, Funktionsauswahltaster u. dgl. angeordnet.

## BEZUGSZEICHENLISTE

Ma/88080

| Nr | Bezeichnung | Nr | Bezeichnung |
|----|-------------|----|-------------|
| 1 | Handbelichtungsmesser | 26 | Dauerlichtmessung bei Zeitvorwahl |
| 2 | Optisches Suchersystem | 27 | " " Blendenvorwahl |
| 3 | Okular | 28 | Blitzmessung |
| 4 | Objektivlinse | 29 | Zonenmessung |
| 5 | Strahlenteiler | 30 | Cine-Funktion |
| 6 | Spiegel | 31 | Korrekturwerteingabe |
| 7 | Pentaprisma | 32 | Digitalanzeige |
| 8 | Feldlinse | 33 | " |
| 9 | Gehäuse | 34 | Einheiten |
| 10 | Unterseite v. 9 | 35 | Warnmarke |
| 11 | Handgriff | 36 | " |
| 12 | Lichtstrahl | 37 | Batterie |
| 13 | Blende | 38 | Bedienungselemente |
| 14 | Sensor | 39 | |
| 15 | Flüssigkristallanzeige | 40 | |
| 16 | Lichteinfallsseitenfläche | 41 | |
| 17 | Freifeld | 42 | |
| 18 | Anzeigeelemente | 43 | |
| 19 | | 44 | |
| 20 | LED's | 45 | |
| 21 | Blendenskala | 46 | |
| 22 | Zonenskala | 47 | |
| 23 | Bargraph | 48 | |
| 24 | Filmempfindlichkeitseinstellung | 49 | |
| 25 | Dauerlichtmessung | 50 | |

## Ansprüche

1. Vorrichtung zur selektiven Lichtmessung für photographische Zwecke in Form eines Handbelichtungsmessers mit folgenden Merkmalen:

- ein optisches Suchersystem (2) weist einen ein Okular (3), eine Objektivlinse (4), sowie dazwischenliegende optische Elemente (z. B. Feldlinse 8, Strahlenteiler 5, total reflektierender Spiegel 6, Pentaprisma 7) enthaltenden Strahlengang zum selektiven Aufsuchen und Abtasten eines photographischen Objektes (Meßfeldes) auf,

- in einem Gehäuse (9) ist ein lichtempfindlicher Sensor (14) angeordnet, der auf einen ausgewählten und gekennzeichneten Ausschnitt (Meßwinkel) des Sucherbildes anspricht,

- mit dem Sensor (14) ist eine elektronische Auswahl- und Verstärkerschaltung (logarithmische Verstärker 14a, 14a', Analog-Digital-Wandler 14b, Mikroprozessor 14c) sowie eine Anzeigevorrichtung und ein Bedienfeld (38) verbunden,

gekennzeichnet durch folgende Merkmale:

- das Suchersystem (2), die Meßwerterfassungsvorrichtung (Sensor 14, Verstärker 14a, A/D-Wandler 14b), die Meßwertverarbeitung 14c sowie die Anzeigevorrichtung 15 und die Elemente des Bedienfeldes 38 sind gemeinsam in/an ein- und demselben Gehäuse untergebracht bzw. angebracht;

- die Anzeige i. w. samtlicher belichtungsrelevanter Daten, Meß- und Funktionswerte erfolgt im Sucherfeld über ein Display, um die Abbildung des Sucherfeldes (17) herum und ist beim Anvisieren des Meßfeldes durch das Okular (3) der Vorrichtung gleichzeitig mit dem photographischen Objekt sichtbar und ablesbar.

2. Vorrichtung nach Anspruch 1,

dadurch gekennzeichnet,

daß das Display eine Flüssigkristallanzeige (15) (LCD-Display) ist.

3. Vorrichtung nach Anspruch 2,

dadurch gekennzeichnet,

daß die Flüssigkristallanzeige (15) in ihrer Durchlässigkeit bzw. in ihrem Sperrverhalten auf die Wellenlänge der benutzten LED-Beleuchtung ($\lambda$ = 585

nm) durch Verwendung selektiv löschender Polarisationsfolien und eines geeigneten Flüssigkristalls zur Steigerung des Ablesekontrastes abgestimmt ist.

4. Vorrichtung nach einem der vorhergehenden Ansprüche,

dadurch gekennzeichnet,

daß die Flüssigkristallanzeige (15) in der Bildebene der Objektivlinse (4) angeordnet ist.

5. Vorrichtung nach einem der vorhergehenden Ansprüche,

dadurch gekennzeichnet,

daß die Flüssigkristallanzeige (15) zumindest in ihrem Zentrum, durch das die Beobachtung des photographischen Objektes erfolgt, durch mindestens eine Ausstanzung der Polarisationsfolien transparent ist.

6. Vorrichtung nach einem der vorhergehenden Ansprüche,

dadurch gekennzeichnet,

daß die peripheren Teile einer im Strahlengang liegenden Feldlinse (8), welche über den Anzeigeelementen (18) liegen und nicht der Betrachtung des durch das Objektiv entworfenen Bildes des photographischen Objektes dienen, auf ihrer konvexen Seite mit einem diffus reflektierenden Belag (Lack 39) versehen sind (Ulbrichtsche Kugel) und von der planen Seite her zumindest teilweise mit Lichtquellen (LED's 20) beleuchtet werden, wodurch ein Beleuchtungseffekt von der Display-Rückseite her ähnlich einer Ulbrichtschen Kugel erzeugt wird.

7. Vorrichtung nach Anspruch 6,

dadurch gekennzeichnet,

daß die Feldlinse (8) zumindest teilweise größer als die Scheibe der Flüssigkristallanzeige (15) ausgebildet ist und die Lichtquellen (Leuchtdioden 20) für die Beleuchtung unmittelbar neben der Scheibe der Flüssigkristallanzeige (15) zum Bewirken einer gleichmäßigen Ausleuchtung angeordnet sind, ohne selbst im Sucher ganz oder teilweise sichtbar zu werden.

8. Vorrichtung nach einem der vorhergehenden Ansprüche,

dadurch gekennzeichnet,

daß das durch die Objektivlinse (4) abgebildete Bild des Meßfeldes auf einen Bereich der Scheibe der Flüssigkristallanzeige (15) abgebildet wird, bei dem die Polarisationsfilter der Flüssigkristallanzeige (15) ausgestanzt sind und zusammen mit den Anzeigeelementen (21 - 36) durch das Okular betrachtbar ist.

9. Vorrichtung nach einem der vorhergehenden Ansprüche,

dadurch gekennzeichnet,

daß die Flüssigkristallanzeige (15) parallel zur Lichteinfallsseitenfläche .(16) eines Pentapris mas (7) angeordnet ist, vor dessen Lichtausfallsseitenfläche das Okular (3) angeordnet ist.

10. Vorrichtung nach einem der vorhergehenden Ansprüche,

dadurch gekennzeichnet,

daß der lichtempfindliche Sensor (14) hinter einem Strahlenteiler (5) und einem total reflektierenden Spiegel (6) angeordnet ist.

11. Vorrichtung nach einem der vorhergehenden Ansprüche,

dadurch gekennzeichnet,

daß die Flüssigkristallanzeige (15) in ihrem Zentrum die Abbildung des Meßfeldes und dessen Umfeld aufweist, an einer ersten Seite des Meßfeldes (Unterkante des Bildfeldes) ein alphanumerisches Anzeigefeld (32 - 36), an einer zweiten Seite (Oberkante des Bildfeldes) eine analoge Bargraph-Anzeigevorrichtung (21 - 23), sowie an mindestens einer weiteren Seite des Meßfeldes (beide Seitenkanten) ansteuerbare Funktionskennungselemente angeordnet sind.

12. Vorrichtung nach einem der vorhergehenden Ansprüche,

dadurch gekennzeichnet,

daß über die anloge Bargraph-Anzeigevorrichtung (21 - 23) die ermittelten und/oder vorgewählten Blendenwerte und/oder die ausgewählte Meßzone anzeigbar ist.

13. Vorrichtung nach einem der vorhergehenden Ansprüche,

dadurch gekennzeichnet,

daß das alphanumerische Anzeigenfeld in Gruppen aufgeteilt ist, eine erste Gruppe (32) die Belichtungszeit (t), den Filmempfindlichkeitswert (ASA), Verlängerungsfaktoren (VLX), Gangzahlen (F/sec) und/oder Multiblitzzahlen anzeigt, eine weitere Gruppe (33) Blendenwerte (f), Filmempfindlichkeit (DIN), Belichtungswerte (EV), Korrekturwerte (Δ B) und Zonenwerte anzeigt.

14. Vorrichtung nach einem der vorhergehenden Ansprüche,

dadurch gekennzeichnet,

daß das Gehäuse ein aus zwei Gehäusehalbschalen gebildetes, i. w. flach rechteckiges Gehäuse ist, an dessen Unterseite ein Handgriff (11) angeordnet ist.

15. Vorrichtung nach Anspruch 14,

dadurch gekennzeichnet,

daß im Bereich des Handgriffes (11) durch einen Finger der Griffhand blind betätigbare Bedienungselemente (38) angeordnet sind, durch die die Anzeigefunktionen der Displayanzeigen aktivier- und steuerbar sind.

16. Vorrichtung nach einem der vorhergehenden Ansprüche,

dadurch gekennzeichnet,

daß die LCD-Anzeige vorwiegend vom transmissiven Typ ist.

FIG.1

FIG. 2

FIG.3

FIG.4